# EUROPÄISCHE PATENTSCHRIFT

(11) **EP 1 033 279 B1**
(45) Veröffentlichungstag und Bekanntmachung des Hinweises auf die Patenterteilung: **26.05.2004**
(21) Anmeldenummer: 00100777.2
(22) Anmeldetag: 15.01.2000
(51) Int. Cl.: B60N 2/20

(54) **Beschlag für einen Fahrzeugsitz**
Hinge for a vehicle seat
Articulation pour un siège de véhicule

(30) Priorität: 04.03.1999 DE 19909511
(43) Veröffentlichungstag der Anmeldung: 06.09.2000
(73) Patentinhaber: KEIPER GmbH & Co. KG, 67657 Kaiserslautern (DE)
(72) Erfinder: Kraus, Reinhard, 42853 Remscheid (DE)
(74) Vertreter: Patentanwälte Hosenthien-Held und Dr. Held

(56) Entgegenhaltungen:
- EP-A- 0 269 348
- EP-A- 0 469 969
- DE-A- 4 326 623
- DE-A- 19 531 018
- DE-U- 29 615 132

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 296 15 132 U1 ist ein Beschlag dieser Art bekannt, bei dem eine Klinke beim Festlegen des Beschlagunterteils durch einen als Sperrelement wirkenden Spannexzenter verriegelt wird, welcher durch ein Schaltblech bewegt werden kann. Diese Mehrstufigkeit macht eine Vielzahl von einzelnen Bauteilen notwendig, was zu einem hohen Aufwand bei der Herstellung und bei der Montage führt. Außerdem sind beim Entriegeln zum Ausgleich der Fertigungstoleranzen relativ große Wege zurückzulegen. Auch die DE 43 26 623 A1 zeigt einen Beschlag dieser Art, auf dessen Klinke ein Schaltblech angebracht ist, welches die Schwenkachse der Klinke umschließt, einerseits mit einem Fenster einen Zapfen der Klinke umschließt und andererseits bei verriegeltem Beschlag an einem radial versetzt angeordneten Widerlager abgestützt ist.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß im festgelegten Zustand des Beschlagteils die Sperrelemente in der anfänglichen Schwenkrichtung der Klinke hintereinander angeordnet sind, also hintereinander in tangentialer Richtung oder in Umfangsrichtung, wird im Crashfall die Klinke nicht durch eine Bewegung des Beschlagteils geöffnet, sondern durch die Sperrelemente in der verriegelten Stellung gesichert. Die Sperrelemente, beispielsweise Bolzen, Nocken oder Nasen, können bei dieser Anordnung einfacher ausgebildet sein und im festgelegten Zustand des Beschlagteils einen Abstand zueinander aufweisen, was Toleranzen ermöglicht, also die Herstellung der verwendeten Bauteile vereinfacht und verbilligt.

Für ein einfaches Entriegeln der Klinke ist wenigstens eines der Sperrelemente wenigstens teilweise quer zur anfänglichen Schwenkrichtung der Klinke beweglich, weist also eine Bewegungskomponente senkrecht zur anfänglichen Schwenkrichtung auf, und es ist ein Schaltelement vorgesehen, welches dieses Sperrelement bewegt. Mit dem Schaltelement kann dann dieses Sperrelement beispielsweise schräg zur anfänglichen Schwenkrichtung der Klinke gezogen oder gedrückt werden, also am anderen Sperrelement unter Veränderung des Abstandes zur Schwenkachse der Klinke vorbei geführt werden, so daß es im Falle einer Schwenkbewegung der Klinke nicht mehr auf das andere Sperrelement trifft.

Ein solches Schaltelement kann beispielsweise ein an der Klinke angebrachtes Schaltblech sein, welches in einem eingeschränkten Winkelbereich relativ zur Klinke schwenkbar ist, beispielsweise indem es in einer Kulisse der Klinke geführt wird, und welches wenigstens eines der Sperrelemente trägt. Damit kann die Bewegung der Klinke mehrstufig, gegebenenfalls zeitversetzt, erfolgen, um die Klinke zu sichern und zu entsichern. Ferner kann dadurch die Anzahl der Bauteile des Beschlages verringert werden, was die Herstellung des Beschlages vereinfacht und verbilligt.

Zur Sicherung der Klinke in der entgegengesetzten Richtung weist der Beschlag vorzugsweise ein Federelement auf, in einer besonders bevorzugten Ausführungsform eine Zugfeder, welche die Klinke in ihre verriegelte Stellung zurückzieht. Mit dem Federelement kann auch das Schaltblech fixiert werden.

Für ein Entriegeln der Klinke bei gleichzeitiger Belastung des Beschlags, was als sogenannte Panikentriegelung nach einem Crash auftreten kann, ist es von Vorteil, wenn bei der Entriegelung keine in Selbsthemmung befindlichen Teile bewegt werden. Die Sperrelemente können aneinander vorbei geführt werden, während die Klinke, beispielsweise indem eine Schwenkbewegung der Klinke zur Freigabe des Anschlags anfänglich ungefähr senkrecht zur Schwenkrichtung des Beschlagunterteils verläuft, dann nicht zusätzlich die anliegende Belastung überwinden muß. Gegebenenfalls sind lediglich die Reibungskräfte gegenüber dem Normalgebrauch erhöht. Die schaltbaren Sperrelemente dienen daher der dynamischen Sicherheit, der Paniklastaufnahme und der Steigerung der Lastaufnahme durch eine Zusatzabstützung der Klinke.

In einer bevorzugten Ausführungsform ist die Klinke um eine relativ zum Beschlagteil verlagerbare Schwenkachse beweglich, d.h. schwimmend gelagert. Die Klinke kann dann außer der Schwenkbewegung zum Festlegen und Freigeben des Anschlages noch eine Bewegung zum Zwecke ihrer Verriegelung durchführen. Dadurch kann die Anzahl der Bauteile des Beschlages verringert werden, was die Herstellung des Beschlages vereinfacht und verbilligt, insbesondere wenn die Klinke zur Verlagerung ihrer Schwenkachse ein Langloch aufweist, das einfach herzustellen ist.

In einer besonders bevorzugten Ausführungsform ändert sich durch die Verlagerung der Schwenkachse der Klinke bei wenigstens einem Sperrelement der Abstand zur Schwenkachse, so daß je nach Lage der Schwenkachse die beiden Sperrelemente die Klinke sperren oder die beiden Sperrelemente aneinander vorbei geführt werden können. Die Klinke kann dann für ihre Freigabe so bewegt werden, daß bei einer anschließenden Schwenkbewegung die Sperrelemente nicht mehr wirksam sind, die Klinke also entriegelt. Die Verlagerung der Schwenkachse kann auch dazu eingesetzt werden, daß im Crashfall die Klinke sich so bewegt, daß die Sperrelemente ihre Wirkung voll entfalten, beispielsweise in Anlage aneinander geraten. Die Verlagerung der Schwenkachse hat in beiden Fällen die gleiche Wirkung wie eine Bewegung von wenigstens einem Sperrelement, beispielsweise mittels eines Schaltelementes.

Mit einem keilförmigen Langloch ist es möglich, die Klinke im verriegelten Zustand spielfrei und damit klapperfrei zu stellen. Beispielsweise zieht im verriegelten Zustand der Klinke eine Feder so an der Klinke, daß der Klinkenbolzen zur Lagerung der Klinke in dem sich verjüngenden Ende zu liegen kommt. Damit ist auch ein Ausgleich eines etwaigen Verschleißes möglich. Beim Entriegeln der Klinke oder im Crashfall kann der Klinkenbolzen an das andere, breitere Ende des Langloches gelangen.

Ein erfindungsgemäßer Fahrzeugsitz weist wenigstens einen, vorzugsweise zwei der erfindungsgemäßen Beschläge auf. Ein erfindungsgemäßer Beschlag kann beispielsweise als Rastbeschlag oder als Taumelbeschlag ausgebildet sein. Die Schwenkachsen der Rückenlehne bei der Neigungseinstellung und beim Freischwenken können unterschiedlich sein oder zusammenfallen. Im ersten Fall ist der Beschlag vorzugsweise an einer sitzteilfesten Stelle angelenkt und an einer weiteren sitzteilfesten Stelle lösbar festgelegt. Im zweiten Fall weist der Beschlag verschiedene, zu einander verdrehbare Teile auf, die unterschiedlich aneinander festlegbar sind. Zusammenfallende Schwenkachse haben den Vorteil, daß beim Freischwenken die Rückenlehne nicht unerwartet gegen den Fahrzeughimmel stößt.

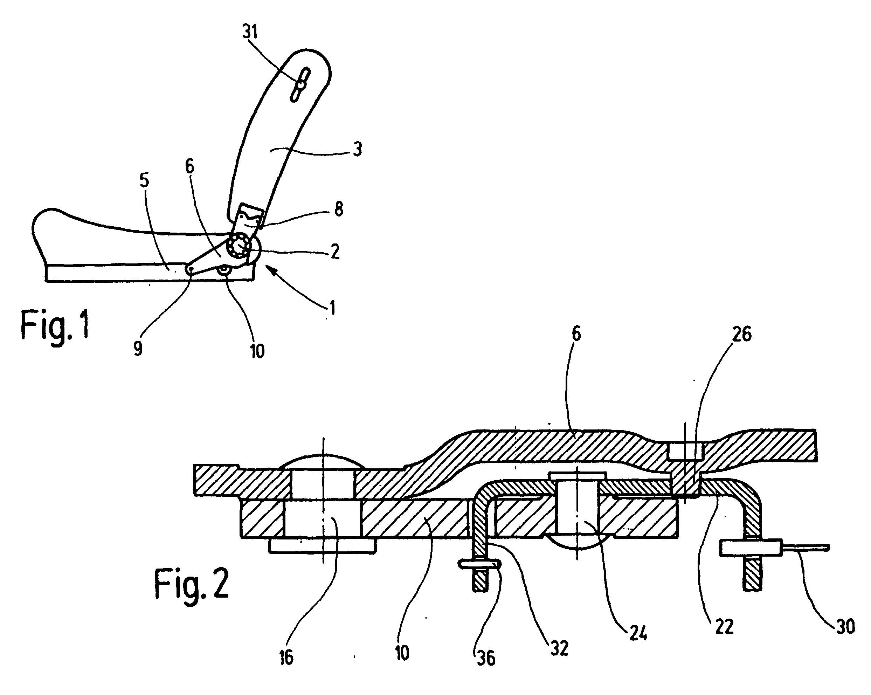

Im folgenden ist die Erfindung anhand dreier in der Zeichnung dargestellter Ausführungsbeispiele näher erläutert. Es zeigen
- Fig. 1: eine Ansicht der linken Seite eines beispielhaften Fahrzeugsitzes,
- Fig. 2: einen Schnitt durch das erste Ausführungsbeispiel entlang der Linie II-II in Fig. 3,
- Fig. 3: eine Ansicht der dem Fahrzeugsitz zugewandten Seite des ersten Ausführungsbeispiels, das auf der rechten Seite des Fahrzeugsitzes angeordnet ist und sich im festgelegten Zustand befindet,
- Fig. 4: eine Teilansicht entsprechend Fig. 3, die den Zustand des ersten Ausführungsbeispiels beim Entriegeln wiedergibt,
- Fig.5: eine Teilansicht entsprechend Fig. 3, die den Zustand des ersten Ausführungsbeispiels beim Einfallen wiedergibt,
- Fig. 6: eine Teilansicht entsprechend Fig. 3, die den Zustand des ersten Ausführungsbeispiels bei einem Crash wiedergibt,
- Fig. 7: eine Teilansicht der dem Fahrzeugsitz zugewandten Seite des zweiten Ausfiihrungsbeispiels, das auf der rechten Seite des Fahrzeugsitzes angeordnet ist und sich im festgelegten Zustand befindet,
- Fig. 8: eine Teilansicht entsprechend Fig. 7, die den Zustand des zweiten Ausführungsbeispiels zu Beginn des Entriegelns wiedergibt,
- Fig. 9: eine Teilansicht entsprechend Fig. 7, die den Zustand des zweiten Ausführungsbeispiels nach dem Entriegeln wiedergibt,

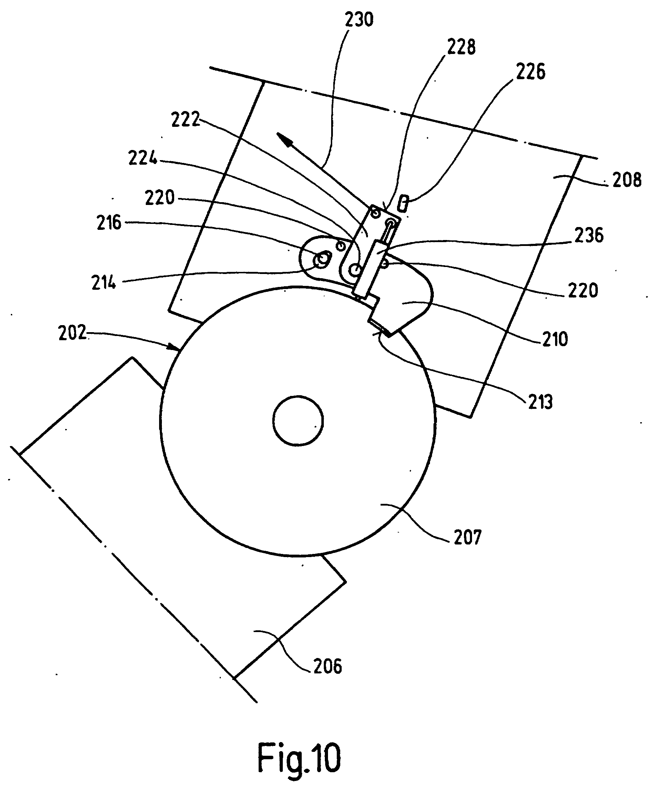

- Fig. 10: eine Teilansicht der dem Fahrzeugsitz zugewandten Seite des dritten AusFührungsbeispiels, das ebenfalls auf der rechten Seite des Fahrzeugsitzes angeordnet ist und sich im festgelegten Zustand befindet, und
- Fig. 11: eine Teilansicht des dritten Ausführungsbeispiels im Crashfall.

Beim ersten Ausführungsbeispiel weist ein Fahrzeugsitz 1 für ein Kraftfahrzeug auf jeder Seite einen als Gelenkbeschlag, insbesondere als Rastbeschlag, ausgebildeten Beschlag 2 auf. Über die beiden Beschläge 2 ist die Rückenlehne 3 des Fahrzeugsitzes 1 an dessen Sitzteil 5 angebracht. Jeder Beschlag 2 umfaßt ein Beschlagunterteil 6 und ein Beschlagoberteil 8. Durch Verdrehen der beiden Beschlagteile 6 und 8 läßt sich die Neigung der Rückenlehne 3 einstellen. Die Richtung der Achse, um die sich die Rückenlehne 3 neigt, ist im folgenden als Sitzquerrichtung bezeichnet. Die weiteren Richtungsangaben beziehen sich auf die gewöhnliche Orientierung des Fahrzeugsitzes 1 im Kraftfahrzeug.

Das Beschlagunterteil 6 ist an seinem in Fahrtrichtung vorderen Ende auf einem am Sitzteil 5 befestigten Achszapfen 9 schwenkbar gelagert. Das Beschlagunterteil 6 ist ferner an seinem hinteren Ende in nachstehend näher beschriebener Weise mittels einer Klinke 10 am Sitzteil 5 festlegbar. Zum Freischwenken der Rückenlehne 3 wird jeweils durch Entriegeln der Klinke 10 das Beschlagunterteil 6 freigegeben und der Beschlag 2 als Ganzes zusammen mit der Rückenlehne 3 um den Achszapfen 9 nach vorne geschwenkt. Nach dem Zurückschwenken fällt die Klinke 10 wieder ein und legt dadurch das Beschlagunterteil 6 wieder fest.

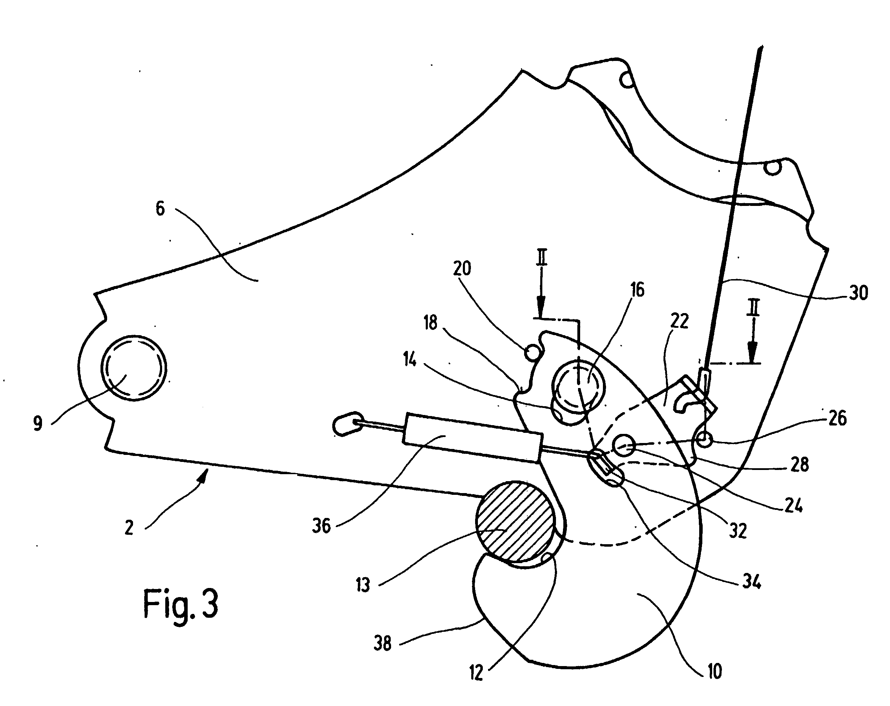

Die an ihrem unteren Ende als Fanghaken ausgebildete Klinke 10 weist ein Hakenmaul 12 auf, mit dem sie in dem in Fig. 3 dargestellten, festgelegten Zustand des Beschlagunterteils 6 einen in Sitzquerrichtung senkrecht vom Sitzteil 5 nach außen abstehenden, bolzenförmigen Anschlag 13 formschlüssig umgreift. Das Hakenmaul 12 liegt in dieser Stellung auf der Unterseite des Anschlags 13 an, während das Beschlagunterteil 6 selber auf der Oberseite des Anschlags 13 aufliegt. Der Anschlag 13 wirkt dadurch in den beiden möglichen Schwenkrichtungen des Beschlagunterteils 6 und gegebenenfalls in der vom Achszapfen 9 radial nach außen zeigenden Richtung als Anlagefläche oder Abstützung.

Die auf der dem Sitzteil 5 zugewandten Innenseite des Beschlagunterteils 6 angeordnete Klinke 10 weist ferner am oberen Ende ein Langloch 14 auf, welches einen in Sitzquerrichtung senkrecht vom Beschlagunterteil 6 abstehenden Klinkenbolzen 16 umschließt. In dieser Stellung der Klinke 10 erstreckt sich das Langloch 14 ungefähr in der Schwenkrichtung des Beschlagunterteils 6. Der Klinkenbolzen 16 ist an seinem vom Beschlagunterteil 6 abgewandten Ende mit einer Verdickung versehen, welche die Klinke 10 gegen eine Bewegung in axialer Richtung des Klinkenbolzens 16 sichert. Der Rand der Klinke 10 ist an dem das Langloch 14 aufweisenden Ende als Stützfläche 18 ausgebildet, welche bei einer Anlage an einen senkrecht vom Beschlagunterteil 6 abstehenden Stützzapfen 20 als Anschlag zur Begrenzung der Bewegung der Klinke 10 dient, insbesondere wenn die Klinke 10 nicht eingefallen ist.

Ein Schaltblech 22 ist zwischen dem Beschlagunterteil 6 und der Klinke 10 angeordnet und mittels eines Zapfens 24 an der Klinke 10 drehbar angelenkt. Das Schaltblech 22 ist an seinem bezüglich des Zapfens 24 hinteren Ende konkav ausgebildet und umgibt im festgelegten Zustand des Beschlagunterteils 6 mit Abstand einen hinter dem Schaltblech 22 angeordneten, senkrecht vom Beschlagunterteil 6 abstehenden Sperrbolzen 26. Dabei ist die hintere untere Ecke des Schaltblechs 22, welche als Sperrnase 28 ausgebildet ist, unterhalb des Sperrbolzens 26 angeordnet. Sperrnase 28 und Sperrbolzen 26 sind also in Schwenkrichtung der Klinke 10 hintereinander angeordnet und wirken daher im Crashfall als Sperrelemente.

Oberhalb der Sperrbolzens 26 ist am Schaltblech 22 ein Ende eines Seilzuges 30 befestigt, dessen anderes Ende mit einem an der Seite der Rückenlehne 3 angeordneten Handgriff 31 zum Entriegeln der Klinke 10 verbunden ist. An seinem bezüglich des Zapfens 24 vorderen Ende ist am Schaltblech 22 eine Abwinkelung 32 ausgebildet, welche durch eine in der Klinke 10 ausgebildete Kulisse 34 greift. Auf der anderen Seite der Klinke 10 ist an der Abwinkelung 32 ein Ende eines Federelementes 36 befestigt, dessen anderes Ende am Beschlagunterteil 6 angebracht ist, beispielsweise eingehakt ist.

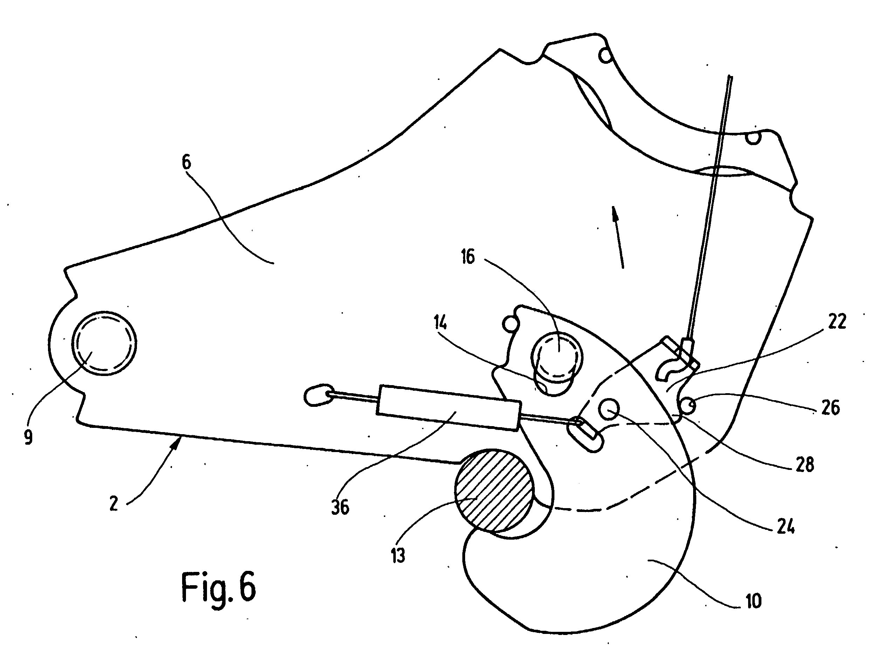

Im festgelegten Zustand des Beschlagunterteils 6 liegt das Beschlagunterteil 6 oben auf dem Anschlag 13, die Klinke 10 umschließt den Anschlag 13 von unten, der Klinkenbolzen 16 liegt am oberen Ende des Langloches 14 an, die Sperrnase 28 des Steuerblechs 22 weist an ihrer Spitze einen größeren radialen Abstand zum Klinkenbolzen 16 auf als der Sperrbolzen 26 und befindet sich unterhalb desselben, und das Federelement 36 hat die Abwinkelung 32 des Schaltbleches 22 zum vorderen Ende der Kulisse 34 gezogen. Durch diese Verriegelung der Klinke 10 werden bei einer Belastung des Beschlags 2, beispielsweise beim Vorschwenken der Rückenlehne 3 im Crashfall (vgl. Fig. 6), die Kräfte vom Beschlagunterteil 6 sowohl über den Klinkenbolzen 16 als auch über den Sperrbolzen 26 und das dann mit der Sperrnase 28 anliegende Schaltblech 22 auf die Klinke 10, und von dieser über den Anschlag 13 auf das Sitzteil 5 übertragen, beim Zurückschwenken der Rückenlehne 3 direkt vom Beschlagunterteil 6 auf den Anschlag 13 übertragen. Der Beschlag 2 kann daher keine Ausweichbewegung durchführen, was den Benutzer des Fahrzeugsitzes 1 schützt.

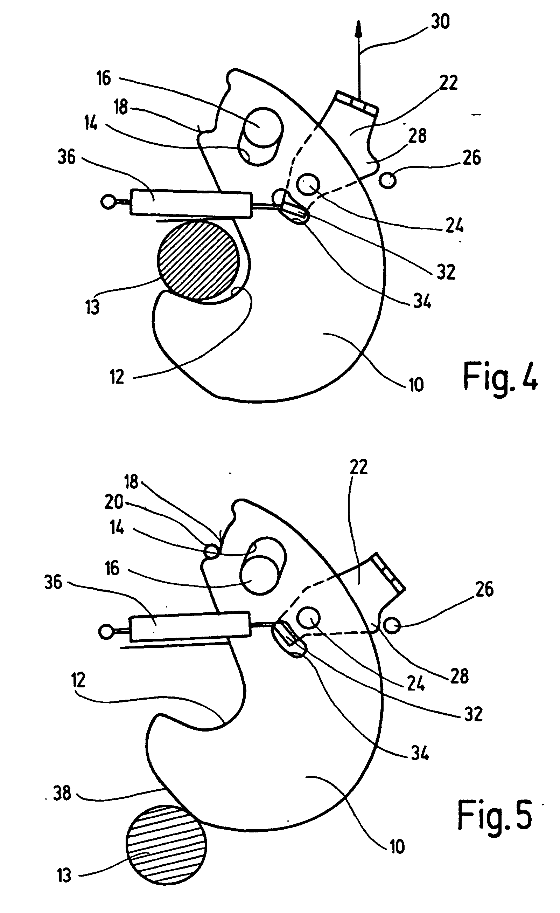

Soll die Rückenlehne 3 freigeschwenkt werden, um beispielsweise in einem zweitürigen Kraftfahrzeug den Zugang zur Rücksitzbank zu ermöglichen, also die Klinke 10 entriegelt werden, wird über den Handgriff 31 der Seilzug 30 nach oben gezogen. Dadurch wird das als Schaltelement wirkende Schaltblech 22 entgegen der Kraft des Federelementes 36 geschwenkt (in der Darstellung gemäß Fig. 4 gegen den Uhrzeigersinn) und zugleich die Abwinkelung 32 an das hintere Ende der Kulisse 34 geschwenkt. Dadurch verringert sich der radiale Abstand der Sperrnase 28 zum Klinkenbolzen 16 im Vergleich zum radialen Abstand des Sperrbolzens 26 zum Klinkenbolzen 16, so daß die Sperrnase 28 am Sperrbolzen 26 vorbei gelangen kann. Das Schaltblech 22 mit der Sperrnase 28 hat sich somit wenigstens teilweise quer zur anfänglichen Richtung der nachfolgend einsetzenden Schwenkbewegung der Klinke 10 bewegt.

Die am Schaltblech 22 angreifende Zugkraft wird über den Zapfen 24 auf die Klinke 10 übertragen, die daraufhin in gleicher Richtung wie das Schaltblech 22 zu schwenken beginnt. Die anfängliche Schwenkrichtung verläuft ungefähr senkrecht zur möglichen Schwenkrichtung des Beschlagunterteils 6. Zugleich wird die Klinke 10 nach oben gezogen, so daß der Klinkenbolzen 16 sich zum unteren Ende des Langloches 14 bewegt. Sobald die Sperrnase 28 am-Sperrbolzen 26 vorbei gelangt ist, kann die Klinke 10 so weit geschwenkt werden, daß die Klinke 10 sich öffnet und ihr Hakenmaul 12 den Anschlag 13 freigibt.

Das Beschlagunterteil 6 und damit die Rückenlehne 3 kann dadurch vorgeschwenkt werden. In der Regel wird der Handgriff 31 dann losgelassen. Das Federelement 36 zieht die Abwinkelung 32 des Schaltblechs 22 innerhalb der Kulisse 34 und damit die Klinke 10 zu sich heran. Dadurch schwenken die Klinke 10 und das Schaltblech 22 zurück in ihre Ausgangsposition. Zugleich wird die Sperrnase 28 wieder am Sperrbolzen 26 vorbei geführt, und der Klinkenbolzen 16 bewegt sich innerhalb des Langlochs 14 nach. Durch die Kraft des Federelementes 36 und durch das Zusammenwirken von Stützfläche 18 und Stützzapfen 20, die sich in Anlage aneinander befinden, sind nunmehr nur noch kleine Schwenkbewegungen der Klinke 10 um den in seiner oberen Lage befindlichen Klinkenbolzen 16 möglich. Die Klinke 10 wird dadurch für ein erneutes Verriegeln bereitgehalten.

Wird die Rückenlehne 3 zurückgeschwenkt, wird das Beschlagunterteil 6 abgesenkt, damit die Klinke 10 wieder einfallen kann. Dabei kommt die Klinke 10 zunächst mit einer auf ihrer Außenseite angeordneten Öffnungsschräge 38 in Kontakt mit dem Anschlag 13, wie in Fig. 5 dargestellt. Der Anschlag 13 drückt die Klinke 10 nach oben, so daß der Klinkenbolzen 16 sich im Langloch 14 wieder in seine untere Lage bewegt und die Sperrnase 28 am Sperrbolzen 26 vorbei geführt wird, wobei sich das Schaltblech 22 kaum dreht. Aufgrund der Öffnungsschräge 38 drückt der Anschlag. 13 die Klinke 10 auch nach hinten, so daß die Klinke 10 anschließend an die Bewegung nach oben nach hinten schwenkt, entgegen der Kraft der Feder 36 um den Klinkenbolzen 16 herum, wobei durch die Bewegung der Klinke 10 entlang des Langlochs 14 die Schwenkachse der Klinke 10 verlagert worden ist.

Beim weiteren Absenken des Beschlagunterteils 6 schiebt sich nach der Öffnungsschräge 38 ein Zwischenabschnitt bis zum Hakenmaul 12 vorbei. Die schwenkende Klinke 10 nimmt über die Kulisse 34 und die Abwinkelung 32 das Schaltblech 22 mit, welches dadurch ebenfalls eine Schwenkbewegung (gegen den Uhrzeigersinn in Fig. 5) ausführt. Mit Beginn des Hakenmauls 12 treten aufgrund der Kraft des Federelementes 36 wieder die gleichen Bewegungen wie nach dem Loslassen des Seilzuges 30 auf. Die Klinke 10 umschließt mit ihrem Hakenmaul 12 den Anschlag 13, wodurch das Beschlagunterteil 6 wieder festgelegt ist. In der eingangs beschriebenen Weise wird die Lage der Klinke 10 durch das Federelement 36 gesichert.

Die Winkel- und Reibungsverhältnisse zwischen Hakenmaul 12 und Anschlag 13 sind so beschaffen, daß hinsichtlich des Öffnens keine Selbsthemmung auftritt, und dadurch eine Panikentriegelung der Klinke 10 auch unter Belastung des Beschlagunterteils 6 durchgeführt werden kann. So verlaufen im Ausführungsbeispiel die anfängliche Schwenkrichtung der Klinke 10 beim Öffnen und die Kraftübertragungsrichtung bei einer Belastung des Beschlagunterteils 6 ungefähr senkrecht zueinander.

Im zweiten Ausführungsbeispiel ist ein als Taumelbeschlag ausgebildeter Beschlag 102 an einem nicht dargestellten Fahrzeugsitz angebracht. Der Beschlag 102 weist ein sitzteilfestes Beschlagunterteil 106 und ein Beschlagzwischenteil 107 auf, welches zur Neigungseinstellung der Rückenlehne relativ zum Beschlagunterteil 106 verdrehbar ist. Der Beschlag 102 weist ferner ein lehnenfestes Beschlagoberteil 108 auf, welches im Gebrauchsfall und während der Neigungseinstellung der Rückenlehne mit dem Beschlagzwischenteil 107 verriegelt ist. Zum Freischwenken der Rückenlehne kann das Beschlagoberteil 108 entriegelt und relativ zu den anderen Teilen des Beschlags 102 geschwenkt werden. Das Beschlagoberteil 108 ist daher mittelbar am Sitzteil des Fahrzeugsitzes schwenkbar angelenkt. Zum Verriegeln des Beschlagoberteils 108, also zum Festlegen relativ zu den anderen Teilen des Beschlags 102, ist eine Klinke 110 vorgesehen, die mit einem Rastzahn oder hakenförmigen Ende in eine als Anschlag dienende Raste 113 des Beschlags 102 eingreift. Die Winkel sind so gewählt, daß keine Selbsthemmung vorliegt. Die Klinke 110 ist schwenkbar mittels eines Klinkenbolzens 116 gelagert, welcher am Beschlagoberteil 108 angebracht ist.

Zwischen zwei als Anschläge wirkenden Stützzapfen 120 ist ein Schaltblech 122 über einen Zapfen 124 schwenkbar auf der Klinke 110 gelagert. Im festgelegten Zustand des Beschlagoberteils 108 ist das Schaltblech 122 ungefähr tangential zur anfänglichen Schwenkrichtung der Klinke 110 orientiert. In Verlängerung dieser tangentialen Richtung ist hinter dem Schaltblech 122, in geringem Abstand dazu, am Beschlagoberteil 108 ein Sperrbolzen 126 vorgesehen, der im Crashfall mit der ihm zugewandten, in Anlage kommenden, als Sperrfläche 128 wirkenden Seite des Schaltblechs 122 zusammenwirkt und ein Öffnen der Klinke 110 verhindert.

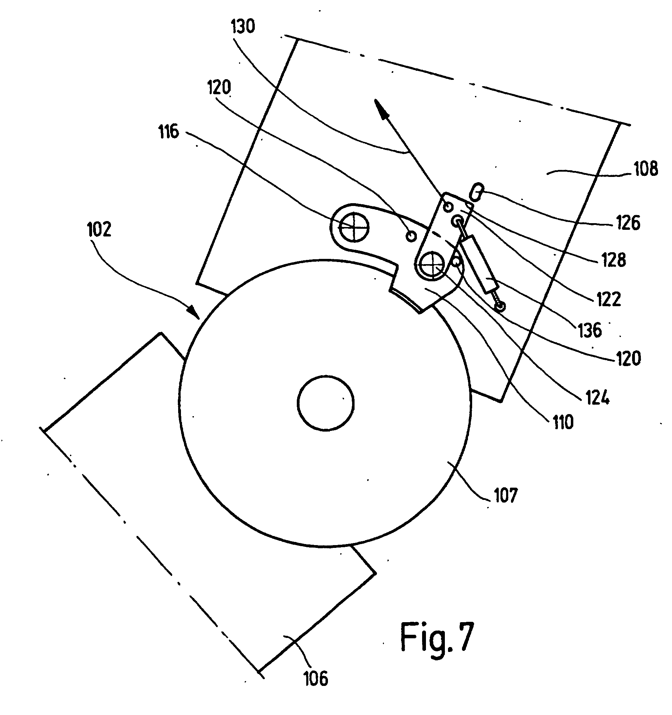

Am Schaltblech 122 sind ferner ein Bowdenzug 130 zum Bewegen des Schaltblechs 122 und ein Federelement 136 mit jeweils einem Ende befestigt. Das mit seinem anderen Ende am Beschlagoberteil 108 befestigte Federelement 136 zieht das Schaltblech 122 so gegen ein Stützzapfen 120, daß das Schaltblech 122 auf den Sperrbolzen 126 ausgerichtet ist und zugleich die Klinke 110 sicher in der Raste 113 gehalten wird, wie in Fig. 7 dargestellt.

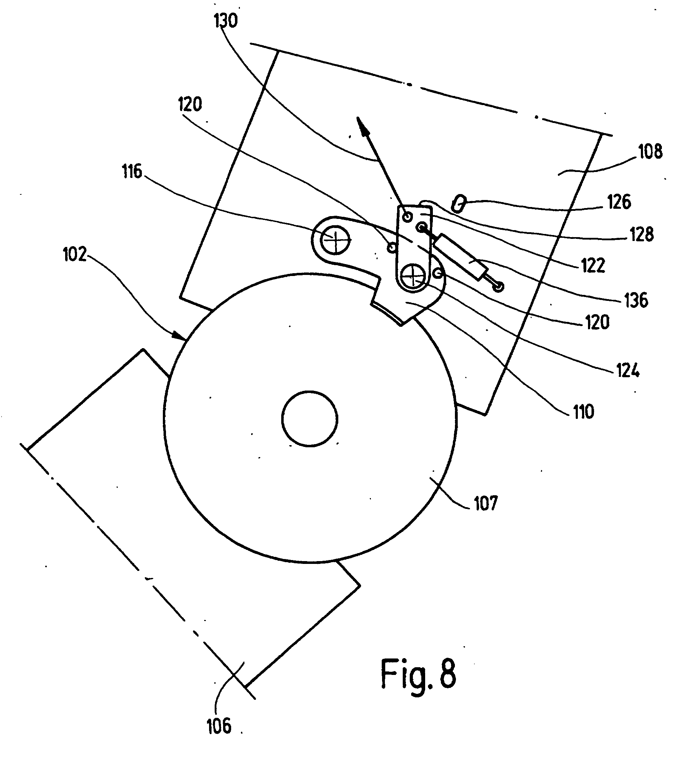

Zum Entriegeln der Klinke 110 zu Beginn des Freischwenkens der Rückenlehne wird, entsprechend dem ersten Ausführungsbeispiel, über den Bowdenzug 130 das Schaltblech 122 entgegen der Kraft des Federelementes 136 geschwenkt. Der Bowdenzug 130 greift hierzu schräg zur Schwenkrichtung der Klinke 110 am Schaltblech 122 an. Sobald das Schaltblech 122 durch diese teilweise quer zur anfänglichen Schwenkrichtung der Klinke 110 verlaufende Schwenkbewegung soweit bewegt worden ist, daß es nicht mehr auf den Sperrbolzen 126 ausgerichtet ist, wie in Fig. 8 dargestellt, kann die Klinke 110 die Raste 113 verlassen.

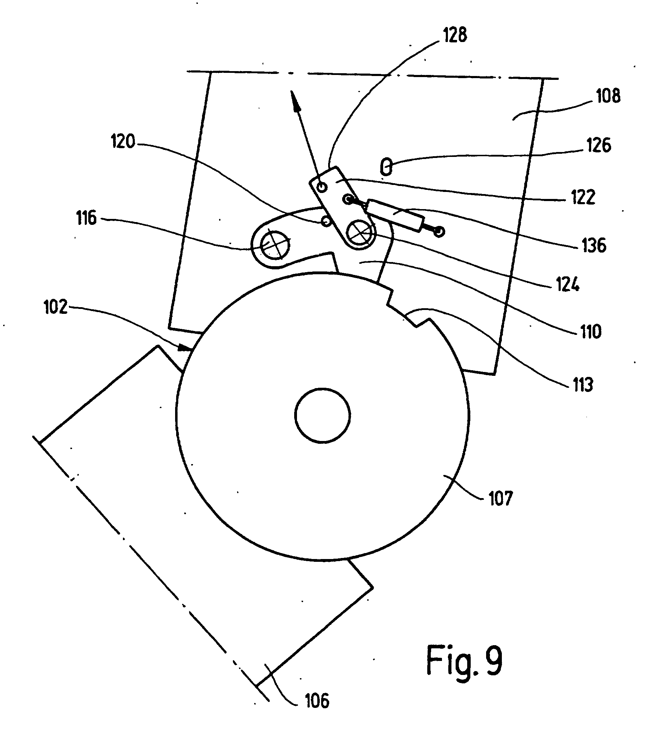

Nunmehr kann das Beschlagoberteil 108 relativ zu den anderen Teilen des Beschlags 102 und damit die Rückenlehne geschwenkt werden, wie in Fig. 9 dargestellt. Sobald beim Zurückschwenken die Klinke 110 über der Raste 113 zu liegen kommt, fällt die Klinke 110 aufgrund der Kraft des Federelementes 136 wieder ein.

Das dritte Ausführungsbeispiel stimmt, soweit nachfolgend nicht abweichend beschrieben, mit dem zweiten Ausführungsbeispiel in Aufbau und Funktion überein, so daß gleiche Bauteile mit um 100 höheren Bezugszeichen bezeichnet sind. Abweichend zum zweiten Ausführungsbeispiel umschließt die Klinke 210 ihren Klinkenbolzen 216 mit einem Langloch 214, welches eine keilförmige Gestalt aufweist. Das sich verjüngende Ende ist dabei vom Beschlagzwischenteil 207 abgewandt, während das andere Ende des Langlochs 214 ungefähr zum Beschlagzwischenteil 207 hinweist. Die vorderen und hinteren Flanken des keilförmigen Langlochs 214 verlaufen vorzugsweise bei den häufigsten Einstellungen der Rückenlehne jeweils schräg zur Vorwärts- bzw. Rückwärtsrichtung des Kraftfahrzeuges. Durch die Keilform können fertigungs- oder verschleißbedingte Toleranzen ausgeglichen und störende Klappergeräusche vermieden werden.

Das Federelement 236 ist so angebracht, daß es über das Schaltblech 222 und dessen Zapfen 224 die Klinke 210 zum Beschlagzwischenteil 207 hinzieht. Im verriegelten Zustand des Beschlagoberteils 208 wird die Klinke 210 dadurch mit ihrem Rastzahn in die Raste 213 und mit dem sich verjüngenden Ende des Langloches 214 gegen den Klinkenbolzen 216 gedrückt. Zum Entriegeln wird, wie beim zweiten Ausführungsbeispiel, über einen Bowdenzug 230 das Schaltblech 222 mit seiner Sperrfläche 228 am Sperrbolzen 226 vorbeigezogen und dann die Klinke 210 aus der Raste 213 gehoben. Dabei kann eine Bewegung des Langloches 214 relativ zum Klinkenbolzen 216, verbunden mit einem Ausheben der Klinke 210 aus der Raste 213, den Entriegelungsvorgang unterstützen.

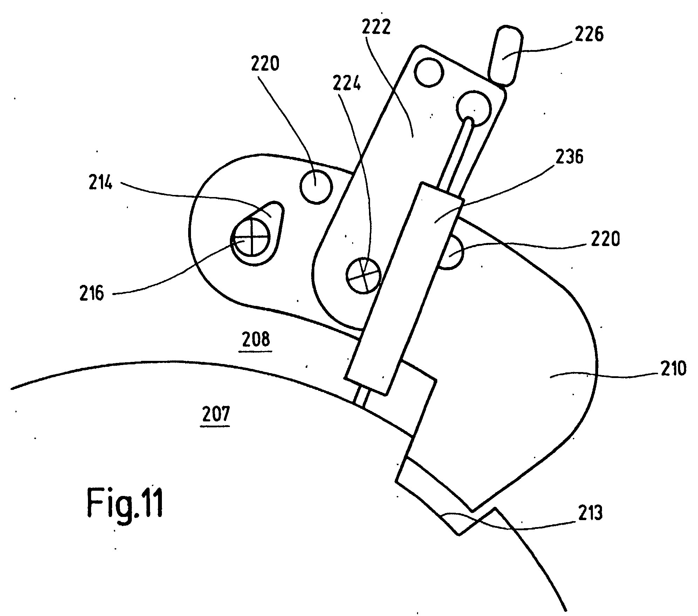

Im Falle eines Frontcrashs drückt die Rückenlehne über das Beschlagoberteil 208 mit dem Klinkenbolzen 216 nach vorne. Dadurch gleitet die Klinke 210 mit der vorderen Flanke ihres Langlochs 214 am Klinkenbolzen 216 entlang und aufgrund der Schräge der vorderen Flanke nach oben, so daß der Klinkenbolzen 216 in den Bereich des sich verbreiternden Endes des Langloches 214 gelangt. Zugleich wird die Klinke 210 entgegen der Kraft des Federelementes 236 ein kleines Stück weit aus der Raste 213 gedrückt, und das Schaltblech 222 gelangt mit seiner Sperrfläche 228 in Anlage an den Sperrbolzen 226. Dadurch wird eine weitere Öffnungsbewegung der Klinke 210 verhindert. Diese Situation ist in Fig. 11 dargestellt.

Im Falle eines Heckcrashs übt das Beschlagzwischenteil 207 ein öffnendes Moment auf die Klinke 210 aus und drückt diese ein kleines Stück weit aus der Raste 213. Zugleich gleitet die Klinke 210 mit der hinteren Flanke ihres Langlochs 214 am Klinkenbolzen 216 entlang und aufgrund der Schräge der hinteren Flanke nach oben, so daß der Klinkenbolzen 216 ebenfalls in den Bereich des sich verbreiternden Endes des Langloches 214 gelangt. Da wiederum das Schaltblech 222 mit seiner Sperrfläche 228 entgegen der Kraft des Federelementes 236 in Anlage an den Sperrbolzen 228 gelangt, wird ebenfalls eine weitere Öffnungsbewegung der Klinke 210 verhindert.

### Bezugszeichenliste

- 1: Fahrzeugsitz
- 2: Beschlag (erstes Ausführungsbeispiel)
- 3: Rückenlehne
- 5: Sitzteil
- 6: Beschlagunterteil
- 8: Beschlagoberteil
- 9: Achszapfen
- 10: Klinke
- 12: Hakenmaul
- 13: Anschlag
- 14: Langloch
- 16: Klinkenbolzen
- 18: Stützkurve
- 20: Stützzapfen
- 22: Schaltblech
- 24: Zapfen
- 26: Sperrbolzen
- 28: Sperrnase
- 30: Seilzug
- 31: Handgriff
- 32: Abwinkelung
- 34: Kulisse
- 36: Federelement
- 38: Öffnungsschräge
- 102, 202: Beschlag (zweites bzw. drittes Ausführungsbeispiel)
- 106, 206: Beschlagunterteil
- 107, 207: Beschlagzwischenteil
- 108, 208: Beschlagoberteil
- 110,210: Klinke
- 113, 213: Raste
- 116, 216: Klinkenbolzen
- 120, 220: Stützzapfen
- 122, 222: Schaltblech
- 124,224: Zapfen
- 126,226: Sperrbolzen
- 128, 228: Sperrfläche
- 130, 230: Bowdenzug
- 136,236: Federelement
- 214: Langloch

## Patentansprüche

1. Beschlag (2; 102; 202) für einen Fahrzeugsitz, insbesondere für einen Kraftfahrzeugsitz, mit einem Beschlagteil (6; 108; 208), das zum Freischwenken der Rückenlehne (3) des Fahrzeugsitzes (1) am Sitzteil (5) des Fahrzeugsitzes (1) schwenkbar angelenkt ist und das durch eine Klinke (10; 110; 210) festlegbar ist, wobei die Klinke (10; 110; 210) relativ zum Beschlagteil (6; 108; 208) beweglich an diesem gelagert ist und die Klinke (10; 110; 210) im festgelegten Zustand des Beschlagteils (6; 108; 208) wenigstens teilweise durch Sperrelemente (22, 26, 28; 122, 126, 128; 222, 226, 228) gesichert ist, **dadurch gekennzeichnet, daß** im festgelegten Zustand des Beschlagteils (6; 108; 208) die Sperrelemente (22, 26, 28; 122, 126, 128; 222, 226, 228) in der anfänglichen Schwenkrichtung der Klinke (10; 110; 210) hintereinander angeordnet sind und wenigstens eines der Sperrelemente (22, 26, 28; 122, 126, 128; 222, 226, 228) wenigstens teilweise quer zur anfänglichen Schwenkrichtung der Klinke (10; 110; 210) beweglich ist, wobei an der Klinke (10; 110; 210) ein im Abstand zur Schwenkachse der Klinke (10; 110; 210) angeordnetes, relativ zur Klinke (10; 110; 210) schwenkbares Schaltelement (22; 122; 222) angebracht ist, welches wenigstens eines der Sperrelemente (28; 128; 228) bewegt und dabei den Abstand dieses Sperrelementes (28; 128; 228) zur Schwenkachse der Klinke (10; 110; 210) verändert.

2. Beschlag nach Anspruch 1, **dadurch gekennzeichnet, daß** das Schaltelement (22; 122; 222) ein Schaltblech ist, welches in einem eingeschränkten Winkelbereich relativ zur Klinke (10; 110; 210) schwenkbar ist und welches wenigstens eines der Sperrelemente (28; 128; 228) trägt.

3. Beschlag nach Anspruch 1 oder 2, **dadurch gekennzeichnet, daß** der Beschlag (2; 102; 202) ein Federelement (36; 136; 236) zur Sicherung der Klinke (10; 110; 210) aufweist.

4. Beschlag nach einem der Ansprüche 1 bis 3, **dadurch gekennzeichnet, daß** eine Schwenkbewegung der Klinke (10; 110; 210) zur Freigabe des Beschlagteils (6; 108; 208) wenigstens anfänglich ungefähr senkrecht zur Schwenkrichtung des Beschlagteils (6; 108; 208) verläuft.

5. Beschlag nach einem der Ansprüche 1 bis 4, **dadurch gekennzeichnet, daß** die Klinke (10; 210) um eine relativ zum Beschlagteil (6; 208) verlagerbare Schwenkachse beweglich ist.

6. Beschlag nach Anspruch 5, **dadurch gekennzeichnet, daß** zur Verlagerung ihrer Schwenkachse die Klinke (10; 210) ein Langloch (14; 214) aufweist.

7. Beschlag nach Anspruch 6, **dadurch gekennzeichnet, daß** das Langloch (214) keilförmig ausgebildet ist.

8. Beschlag nach einem der Ansprüche 5 bis 7, **dadurch gekennzeichnet, daß** durch die Verlagerung der Schwenkachse der Klinke (10; 210) sich bei wenigstens einem Sperrelement (28; 228) der Abstand zur Schwenkachse ändert.

9. Fahrzeugsitz mit wenigstens einem Beschlag nach einem der Ansprüche 1 bis 8.

## Claims

1. Fitting (2; 102; 202) for a vehicle seat, in particular for a motor vehicle seat, having a fitting member (6; 108; 208) which is pivotably articulated to the seat portion (5) of the vehicle seat (1) in order to freely pivot the back rest (3) of the vehicle seat (1) and which can be fixed by means of a detent (10; 110; 210), the detent (10; 110; 210) being supported on the fitting member so as to be moveable relative to the fitting member (6; 108; 208) and the detent (10; 110; 210) being secured at least partially by means of locking elements (22, 26, 28; 122, 126, 128; 222, 226, 228) when the fitting member (6; 108; 208) is in the fixed state, **characterised in that**, when the fitting member (6; 108; 208) is in the fixed state, the locking elements (22, 26, 28; 122, 126, 128; 222, 226, 228) are arranged one behind the other in the initial pivoting direction of the detent (10; 110; 210) and at least one of the locking elements (22, 26, 28; 122, 126, 128; 222, 226, 228) can be moved at least partially transversely to the initial pivoting direction of the detent (10; 110; 210), a switching element (22; 122; 222) being fitted to the detent (10; 110; 210), which switching element (22; 122; 222) is arranged with spacing from the pivot axis of the detent (10; 110; 210) and can be pivoted relative to the detent (10; 110; 210) and which moves at least one of the locking elements (28; 128; 228) and changes the spacing of this locking element (28; 128; 228) relative to the pivot axis of the detent (10; 110; 210).

2. Fitting according to claim 1, **characterised in that** the switching element (22; 122; 222) is a switching sheet which can be pivoted in a limited angular range relative to the detent (10; 110; 210) and which carries at least one of the locking elements (28; 128; 228).

3. Fitting according to claim 1 or 2, **characterised in that** the fitting (2; 102; 202) has a resilient element (36; 136; 236) for securing the detent (10; 110; 210).

4. Fitting according to any one of claims 1 to 3, **characterised in that** a pivoting movement of the detent (10; 110; 210) for releasing the fitting member (6; 108; 208) is carried out at least initially substantially perpendicularly to the pivoting direction of the fitting member (6; 108; 208).

5. Fitting according to any one of claims 1 to 4, **characterised in that** the detent (10; 210) can be moved about a pivot axis which can be displaced relative to the fitting member (6; 208).

6. Fitting according to claim 5, **characterised in that** the detent (10; 210) has an elongate hole (14; 214) for displacing the pivot axis thereof.

7. Fitting according to claim 6, **characterised in that** the elongate hole (214) is of wedge-like form.

8. Fitting according to any one of claims 5 to 7, **characterised in that** the spacing of at least one locking element (28; 228) relative to the pivot axis changes owing to the displacement of the pivot axis of the detent (10; 210).

9. Vehicle seat having at least one fitting according to any one of claims 1 to 8.

## Revendications

1. Articulation (2 ; 102 ; 202) pour un siège de véhicule, en particulier pour un siège de véhicule automobile, munie d'une armature (6 ; 108 ; 208), qui est articulée de façon pivotante à la partie d'assise (5) du siège du véhicule (1) pour le pivotement libre du dossier (3) du siège du véhicule (1), et qui est apte à être fixée par un cliquet (10 ; 110 ; 210), le cliquet (10 ; 110 ; 210) étant monté, par rapport à l'armature (6 ; 108 ; 208), de façon mobile sur celle-ci et le cliquet (10 ; 110 ; 210) étant bloqué dans l'état fixé de l'armature (6 ; 108 ; 208) au moins en partie par des éléments de blocage (22, 26, 28 ; 122, 126, 128 ; 222, 226, 228), **caractérisée par le fait que** dans l'état fixé de l'armature (6 ; 108 ; 208), les éléments de blocage (22, 26, 28 ; 122, 126, 128 ; 222, 226, 228) sont disposés les uns derrière les autres dans le sens initial de pivotement du cliquet (10 ; 110 ; 210) et **par le fait qu'**au moins l'un des éléments de blocage (22, 26, 28 ; 122, 126, 128 ; 222, 226, 228) est mobile au moins en partie transversalement au sens initial de pivotement du cliquet (10 ; 110 ; 210), un élément de commande (22 ; 122 ; 222) apte à pivoter par rapport au cliquet (10 ; 110 ; 210), disposé à distance de l'axe de pivotement du cliquet (10 ; 110 ; 210) étant monté sur le cliquet (10 ; 110 ; 210), lequel élément de commande déplace au moins l'un des éléments de blocage (28 ; 128 ; 228) et à cette occasion modifie la distance de cet élément de blocage (28 ; 128 ; 228) à l'axe de pivotement du cliquet (10 ; 110 ; 210).

2. Articulation selon la revendication 1, **caractérisée par le fait que** l'élément de commande (22 ; 122 ; 222) est une plaque de commande, laquelle est apte à pivoter par rapport au cliquet (10 ; 110 ; 210) dans une zone angulaire limitée et qui porte au moins l'un des éléments de blocage (28 ; 28 ; 228).

3. Articulation selon l'une des revendications 1 ou 2, **caractérisée par le fait que** l'armature (2 ; 102 ; 202) présente un élément de ressort (36 ; 136 ; 236) pour le blocage du cliquet (10 ; 110 ; 210).

4. Articulation selon l'une quelconque des revendications 1 à 3, **caractérisée par le fait qu'**un mouvement de pivotement du cliquet (10 ; 110 ; 210) pour la libération de l'armature (6 ; 108 ; 208) est au moins au début approximativement perpendiculaire au sens de pivotement de l'armature (6 ; 108 ; 208).

5. Articulation selon l'une quelconque des revendications 1 à 4, **caractérisée par le fait que** le cliquet (10 ; 210) est mobile autour d'un axe de pivotement déplaçable par rapport à l'armature (6 ; 208).

6. Articulation selon la revendication 5, **caractérisée par le fait que**, pour le déplacement de son axe de pivotement, le cliquet (10 ; 210), présente un trou oblong (14 ; 214).

7. Articulation selon la revendication 6, **caractérisée par le fait que** le trou oblong (214) est réalisé en forme de coin.

8. Articulation selon l'une quelconque des revendications 5 à 7, **caractérisée par le fait que**, par le déplacement de l'axe de pivotement du cliquet (10 ; 210),la distance à l'axe de pivotement change dans le cas d'au moins un élément de blocage (28 ; 228).

9. Siège de véhicule présentant au moins une articulation telle que définie à l'une quelconque des revendications 1 à 8.
